(19) Europäisches Patentamt
European Patent Office
Office européen des brevets

(11) **EP 1 156 249 A1**

(12) **EUROPÄISCHE PATENTANMELDUNG**

(43) Veröffentlichungstag:
**21.11.2001 Patentblatt 2001/47**

(51) Int Cl.⁷: **F16K 37/00**, G01D 5/16

(21) Anmeldenummer: **01112268.6**

(22) Anmeldetag: **18.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **19.05.2000 DE 20008930 U**

(71) Anmelder: **SIEMENS AKTIENGESELLSCHAFT**
**80333 München (DE)**

(72) Erfinder: **Meinhof, Andre-Heinrich**
**76287 Rheinstetten (DE)**

(54) **Einrichtung zur Befestigung eines Magneten, sowie Stellungsregler mit einer derartigen Einrichtung.**

(57) Einrichtung zur Befestigung eines Magneten (150) an einem beweglichen Element (152), bei welcher ein Magnetträger (160) vorgesehen ist zur Aufnahme des Magneten, der zur variablen Einstellung einer Winkellage zum beweglichen Element (153) in einem Sockel (161) drehbar gelagert ist. Eine eingestellte Winkellage wird durch eine Klammer (175) und eine Spannkappe (200) gesichert.

FIG 18

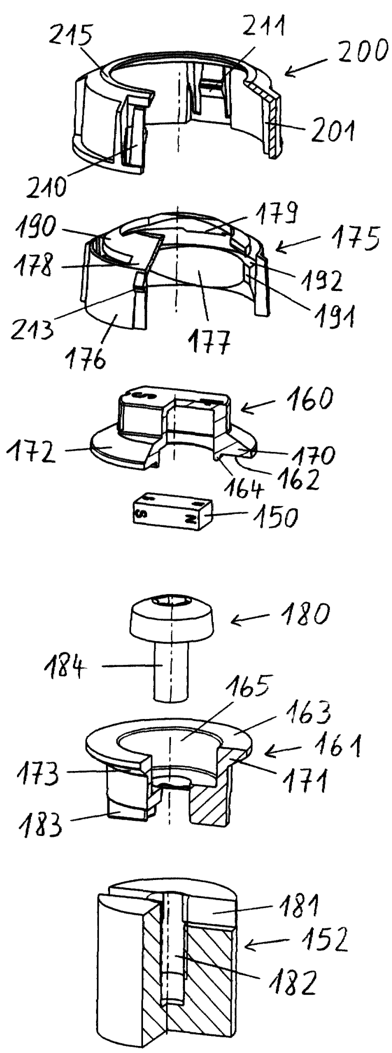


EP 1 156 249 A1

## Beschreibung

Die Erfindung betrifft eine Einrichtung zur Befestigung eines Magneten nach dem Oberbegriff des Anspruchs 1 sowie einen Stellungsregler, insbesondere für ein durch einen Antrieb betätigbares Ventil, mit einer derartigen Einrichtung nach dem Oberbegriff des Anspruchs 6.

Aus der EP 0 637 713 A1 ist bereits ein Stellungsregler für ein durch einen Antrieb betätigbares Ventil bekannt. Das Ventil ist in einer Rohrleitung eingebaut und steuert durch einen entsprechenden Hub eines mit einem Ventilsitz zusammenwirkenden Schließkörpers den Durchtritt eines Mediums. Ein pneumatischer Antrieb ist über eine Schubstange mit dem Schließkörper verbunden. An die Schubstange greift ein Hebel an, der auf einen Potentiometer als Positionsgeber des Stellungsreglers einwirkt. Das Potentiometer erfasst die Ist-Position des Stellglieds. Diese wird in einer Reglereinheit des Stellungsreglers mit einer vorgebbaren Soll-Position verglichen. In Abhängigkeit der ermittelten Abweichung erzeugt die Reglereinheit ein Stellsignal zur Steuerung des pneumatischen Antriebs. Der Sollwert wird dem Stellungsregler durch ein normiertes Signal, beispielsweise eine 4 bis 20 mA-Schnittstelle oder ein digitales Feldbustelegramm, vorgegeben. Die Aufgabe des Stellungsreglers besteht also darin, den vorgegebenen Sollwert der Position des Stellglieds in ein pneumatisches Drucksignal umzusetzen, das dem pneumatischen Antrieb zugeführt wird und in einer entsprechenden Position der Schubstange resultiert.

Daneben sind Klappenventile bekannt, in welchen der Öffnungswinkel einer Drehklappe mit Hilfe eines Drehpotentiometers erfasst wird. In diesem Fall erzeugt ein Stellungsregler ein Stellsignal für einen Schwenkantrieb, der die Drehklappe betätigt.

Wegen ihrer einfachen und preiswerten Technik werden zur Positionserfassung häufig Schleifpotentiometer verwendet, deren Vorteil eine relativ einfache Erzeugung eines auswertbaren elektrischen Stellungssignals bei einem geringen Stromverbrauch ist. Beispielsweise ein mit 3 V betriebenes 10 kΩ Potentiometer verbraucht maximal nur 300 µA. Die Huboder Drehbewegung des Stellglieds wird über entsprechende Anbauteile, beispielsweise über einen Drehhebel mit einem umschaltbaren Zahnradgetriebe, auf die Drehachse des Potentiometers gegeben und die vom Schleifer abgegriffene Teilspannung auf den Analogeingang einer analogen oder digitalen Reglereinheit übertragen. Der Erfassungsbereich des Drehwinkels für Schwenkantriebe beträgt üblicherweise maximal 120°. Für Schubantriebe beträgt der Erfassungsbereich maximal 15 mm. Die lineare Bewegung kann mittels einer Umsetzungsmechanik ebenfalls in einem Drehwinkel von maximal 120° umgewandelt werden.

In vielen Bereichen der Prozess- und Energietechnik hängt der störungsfreie Betrieb einer Anlage von der einwandfreien Funktion der eingesetzten Regelventile ab. Stillstände von Anlagen oder Anlageteilen, verursacht durch ausgefallene Komponenten, vermindern die Produktionskapazität und die mögliche Auslastung der Anlage erheblich. Eine Verminderung von Stillstandszeiten und eine erhöhte Anlagenzuverlässigkeit sind somit wesentliche Ziele für den wirtschaftlichen Betrieb einer Anlage.

Häufig verwendete elektromechanische Schleifpotentiometer zur Dreh- oder Linearpositionserfassung besitzen aufgrund ihres Aufbaus Nachteile in der Langzeitstabilität wegen Abnutzung und Oxidation der Kontaktbahnen sowie in der Schwingungsfestigkeit. Nach längerem quasi-statischem Betrieb neigen ihre Schleifer zum Kleben. Durch mechanischen Verschleiß werden die Schleifer und Widerstandsschichten mit der Zeit abgenutzt oder durch Alterung und Oxidation in ihrer Beschaffenheit verändert. Bei elektromechanischen Schleifpotentiometern wird die Dreh- oder Linearbewegung mittels einer durchgehenden Achse übertragen. Eine geeignete Abkapselung vor Umwelteinflüssen ist daher sehr aufwendig und selbst von Alterung und Verschleiß betroffen.

Aus der EP 0 680 614 B1 ist eine Vorrichtung zum Erfassen einer Winkelposition eines Objektes bekannt. Die in dieser Patentschrift beschriebenen Sensoren nach dem giant magnetoresistiven (GMR-) Effekt bestehen aus abwechselnd hartmagnetischen und weichmagnetischen Metallschichten. Diese sind jeweils nur wenige Atomlagen dick und werden auf einem Siliziumträgermaterial aufgesputtert. Diese Sensoren besitzen eine große Abhängigkeit ihres Widerstands von der Richtung eines einwirkenden Magnetfeldes. Mit einem GMR-Sensor ist somit eine Winkelpositonsänderung eines Magneten gut erfassbar.

Der Erfindung liegt die Aufgabe zugrunde, eine Einrichtung zur Befestigung eines Magneten an einem beweglichen Element zu schaffen, die sich durch einen einfachen Aufbau auszeichnet und bei welcher der Winkel des Magnetfeldes an einer Bezugsposition des beweglichen Elements einstellbar ist.

Der Erfindung liegt weiterhin die Aufgabe zugrunde, einen Positionsgeber für einen Stellungsregler, insbesondere für ein durch einen Antrieb betätigbares Ventil, zu schaffen, der sich bei geringem Herstellungsaufwand durch eine verbesserte Unempfindlichkeit gegen Störungen auszeichnet.

Zur Lösung dieser Aufgabe weisen die neue Einrichtung zur Befestigung eines Magneten die im kennzeichnenden Teil des Anspruchs 1 bzw. der neue Stellungsregler der eingangs genannten Art die im kennzeichnenden Teil des Anspruchs 6 angegebenen Merkmale auf. In den Unteransprüchen sind vorteilhafte Weiterbildungen beschrieben.

Die Erfindung hat den Vorteil, dass die Winkellage des Magneten zum beweglichen Element in einfacher Weise variabel einstellbar ist. Dadurch ist beispielsweise der Nullpunkt eines mit einem GMR-Sensor ausgestatteten Stellungsreglers leicht zu justieren. Da kein magnetisches Material in der Umgebung des Magneten angeordnet ist,

bleibt ein einmal eingestellter Winkel des Magnetfeldes dauerhaft stabil. Eine Hysterese des Magnetfeldes wird zuverlässig vermieden, d.h., das aktuelle Magnetfeld gibt in jedem Fall die Lage des beweglichen Elements wieder und ist unabhängig von der früheren Lage oder der Richtung, aus welcher die aktuelle Lage angefahren wurde.

Ein Schutz des Magneten vor Umwelteinflüssen wird vorteilhaft erreicht, wenn der Magnetträger als Gehäuse ausgebildet ist, in welchem der Magnet durch Kleben oder durch Verguss befestigt ist.

Für eine einfache stufenlose Einstellbarkeit der Winkellage des Magnetfelds können der Magnetträger und der Sockel zur drehbaren Lagerung des Magnetträgers mit zueinander korrespondierenden, im Wesentlichen in einer radialen Ebene verlaufenden, kreisförmigen Flächen versehen werden. Die Flächen werden dann durch eine Klammer zusammengedrückt, welche Bestandteil der Mittel zur Lagesicherung ist.

In vorteilhafter Weise können Magnetträger und Sockel jeweils mit einem radial nach außen ragenden Rand versehen werden, wobei zumindest eine Grundfläche eines Randes kronisch ausgebildet sein soll. Beim Aufsetzen einer im Wesentlichen hohlzylinderförmigen Klammer, welche die Außenseiten der Ränder mit an ihrer Innenseite angeordneten Lagerflächen hintergreift, werden bei geeigneter Auslegung Magnetträger und Sockel zusammengedrückt. Eine derartige Ausbildung hat den Vorteil, dass die Klammer leicht montierbar ist und die Winkellage des Magnetfelds ohne eine Einwirkung von außen stabil beibehalten wird. Sie ist aber durch Kraftanwendung weiterhin leicht einstellbar.

Eine Spannkappe, welche die Außenseiten der Klammer überragt und diese im montierten Zustand verriegelt, kann vorteilhaft in derselben Fügerichtung wie die Klammer montiert werden. Erst nach Aufsetzen der Spannkappe ist die Winkellage des Magnetfelds zum beweglichen Teil fixiert.

Durch den neuen Positionsgeber werden die Nachteile herkömmlicher Potentiometer vermieden, da ein kontaktloses Potentiometer, das im Wesentlichen aus dem Magneten und einem magnetoresistiven Sensor besteht, verwendet wird. Der neue Positionsgeber liefert auch im statischen Fall die genaue Ist-Position des Stellglieds. Eine ohnehin geringe Unlinearität des Ausgangssignals ist leicht kompensierbar. Zwischen Magnet und magnetoresistivem Sensor kann in einfacher Weise eine Trennwand zur Kapselung und damit zum Schutz vor Umwelteinflüssen angebracht werden. Der Positionsgeber ist somit äußerst unempfindlich gegen Verschmutzung und rauhe Umgebung. Der Magnet kann durch die neue Einrichtung außerhalb des Sensorgehäuses an einem Schub- oder Schwenkantrieb leicht so befestigt werden, dass seine magnetischen Feldlinien durch die Gehäusewand auf den magnetoresistiven Sensor einwirken. In das Sensorgehäuse ist eine Auswerteschaltung integrierbar, die anhand der Widerstandsänderung des magnetoresistiven Sensors eine dem Drehwinkel bzw. dem linearen Weg des Magneten proportionale Spannung erzeugt und somit einer Reglereinheit ein der Ist-Position entsprechendes, gegenüber Störeinflüssen unempfindliches Signal liefert.

In einfacher Weise ist ein minimaler Abstand zwischen Magnet und Sensor einzuhalten, um insbesondere bei einem GMR-Sensor eine Beschädigung der hartmagnetischen Schichten zu vermeiden, da bei diesem Sensortyp die Stärke des Magnetfelds 15 kA/m nicht übersteigen darf. Durch das kontaktlose Prinzip des neuen Positionsgebers entfällt das Problem kratzender oder klebender Schleifpotentiometer. Bei Anwendungen, in denen das Potentiometer einem permanenten Rütteln ausgesetzt ist, bietet das kontaktlose Prinzip ebenso Vorteile wie im quasi-statischen Fall, wenn die Potentiometerstellung über lange Zeit nicht verändert wird und sich der Schleifer eines Schleifpotentiometers durch Regelunruhe in der Strecke in die Widerstandsschicht eingraben und evtl. dort hängen bleiben würde. Bildet der Magnet das mit dem Stellglied gekoppelte Bewegungsteil des Positionsgebers, so koppelt er ohne mechanische Durchführung die Stellbewegung durch sein Magnetfeld in den magnetoresistiven Sensor ein. Durch entsprechende Anbauteile kann in einfacher Weise eine exakte Dreh- oder Linearbewegungsführung des Bewegungsteils sichergestellt werden.

Wird der Magnet als Permanentmagnet ausgebildet, so ermöglicht dies einen besonders einfachen Aufbau, da der Magnet keine Stromzuführung benötigt und den Strombedarf des Positionsgebers nicht erhöht.

Eine vorteilhaft deutliche Widerstandserhöhung des magnetoresistiven Sensors ergibt sich, wenn ein sogenannter anisotrop magnetoresistiver Sensor verwendet wird. Bei Drehungen der Magnetisierung der Schicht bezüglich der Stromrichtung eines in der Schicht des Sensors fließenden Messstroms tritt bei diesem Sensortyp eine Widerstandsänderung auf, die einige Prozent des normalen isotropen Widerstandes betragen kann. Damit wird ein ausreichend hoher Signalstörabstand des Messsignals erreicht.

Wird ein sogenannter giant magnetoresistiver (GMR-) Sensor eingesetzt, so hat dies den Vorteil, dass die Widerstandsänderung in einem weiten Bereich feldstärkeunabhängig ist und lediglich empfindlich auf die Richtung des Magnetfeldes reagiert. Die Richtungsabhängigkeit des Widerstands ähnelt einer Cosinusfunktion und ist somit in einem großen Bereich nahezu linear.

In vorteilhafter Weise ist derselbe Sensoraufbau sowohl für einen Anbau an Drehantrieben als auch für einen Anbau an Schubantrieben geeignet, ohne dass konstruktive Änderungen vorgenommen werden müssen. Dazu wird der GMR-Sensor im Randbereich eines Gehäuses derart angeordnet, dass derselbe Sensor zur Detektion einer relativen Drehbewegung zumindest näherungsweise auf der Drehachse eines für diesen Fall vorgesehenen Magneten und zur Detektion einer relativen Verschiebung gemeinsam mit einem für diesen Fall vorgesehenen Magneten in einer

im Wesentlichen senkrecht zur oben erwähnten Drehachse verlaufenden Ebene positionierbar ist. Dabei beträgt der Abstand zwischen dem Sensor und der zum Magneten weisenden Gehäusewand vorzugsweise etwa 5 mm. Damit ist sichergestellt, dass der erforderliche Mindestabstand zwischen Magnet und Sensor eingehalten wird. Durch die Verwendbarkeit bei Dreh- und Schubantrieben werden Logistik- und Lagerhaltungskosten reduziert, da nur ein GMR-Sensortyp bevorratet werden muss.

Eine verbesserte Messgenauigkeit bei Temperaturschwankungen wird erreicht, wenn im Gehäuse des GMR-Sensors eine Temperaturkompensationsschaltung angeordnet ist. Für eine besonders gute Temperaturkompensation kann der Brückenwiderstand des GMR-Sensors gleichzeitig als Messwiderstand der Temperaturkompensationsschaltung genutzt werden. Dadurch entfallen Probleme einer thermischen Kopplung zwischen Messwiderstand und GMR-Sensor völlig.

In vorteilhafter Weise wird der GMR-Sensor auf der einen Seite und die Temperaturkompensationsschaltung auf der anderen Seite derselben Leiterplatte angeordnet. Die Bauelemente der Temperaturkompensationsschaltung, die üblicherweise größere Gehäuse besitzen als das Bauelementegehäuse des GMR-Sensors, müssen somit nicht zwischen GMR-Sensor und der zum Magneten weisenden Außenseite des Positionsgebergehäuses angeordnet werden und beeinflussen deren Abstand nicht. Damit ist ein geringerer Abstand zwischen der Oberkante des Bauelementegehäuses des GMR-Sensors und der Gehäuseaußenseite möglich.

Bei geringem Aufwand kann eine exakte Positionierung von Magnet zum GMR-Sensor erreicht werden, wenn am Gehäuse des GMR-Sensors eine Zentrierhilfe für die Einstellung der relativen Lage des Magneten zum Sensor bei der Montage vorgesehen ist. Diese Positionierhilfe kann als ein auf den Magneten aufsetzbares und nach der Montage wieder abnehmbares Formteil ausgebildet werden, das formschlüssig in einer Ausnehmung am Gehäuse des GMR-Sensors bei der Montage eingesetzt wird. Nach der Befestigung von Magnet und GMR-Sensor wird das Formteil wieder entnommen.

Eine mechanisch formschlüssige Gestaltung von Bewegungsteil und Sensorgehäuse gewährleistet die räumlich lagerichtige Zuordnung von Magnet und Sensor. Die Verbindungen der beiden Teile zu einem kompletten Positionsgeber kann dabei kraftschlüssig erfolgen. Der Positionsgeber kann alternativ auch als mechanisch einteiliger, kompletter Positionsgeberblock aufgebaut sein, der Bewegungsteil mit Magnet, GMR-Sensor und Auswerteelektronik enthält und einen definierten Abstand zwischen dem Magneten und dem GMR-Sensor gewährleistet. Die prinzipiell sowohl mechanisch, wie auch galvanisch vom Bewegungsteil völlig trennbare, aktive Auswertungselektronik ermöglicht eine sowohl gegen elektrische wie auch magnetische Störeinflüsse einfach abschirmbare, störsichere und robuste Positionsgeberelektronik in Kleinbauform. Der Magnet selbst kann dabei ohne eine mechanische Durchführung durch eine Trennwand zum Gehäuse des GMR-Sensors mit diesem in einer gemeinsamen Abschirmkammer liegen, die vor elektrostatischen und elektromagnetischen Störungen schützt. Zum Einsatz in extrem gestörten Bereichen kann eine entsprechende äußere Abschirmung, die auch den Magneten einschließt, als ein bei Bedarf ergänzbares Bauteil ausgeführt werden.

Damit die Reglereinheit nicht der evtl. hohen Temperatur, die beim Positionsgeber am Stellglied herrscht, ausgesetzt ist, kann sie in vorteilhafter Weise in einem zweiten, vom Gehäuse des GMR-Sensors getrennten Gehäuse angeordnet werden. In diesem Fall werden der Positionsgeber und die Reglereinheit durch ein Medium zur Übertragung der Ist-Position des Stellglieds, beispielsweise durch ein elektrisches Kabel, miteinander verbunden. Die Erfassung der Linear- oder Drehbewegung erfolgt dabei direkt am Antrieb oder Stellglied durch den Positionsgeber in einem Sensorgehäuse, das durch einen entsprechenden Anbausatz befestigt wird. Das Sensorgehäuse kann auch durch das Gehäuse eines Stellungsreglers gebildet werden, in welchem für den getrennten Aufbau lediglich die Schaltungsteile des Positionsgebers untergebracht sind. Die Reglereinheit des Stellungsreglers kann in einiger Entfernung beispielsweise an einem Montagerohr oder ähnlichen Montagehilfe angebaut werden und ist mit dem Positionsgeber über eine elektrische Kabelverbindung und mit dem pneumatischen Antrieb über eine oder zwei pneumatische Leitungen verbunden. Eine Unterbringung von Positionsgeber und Reglereinheit in getrennten Gehäusen ist dann sinnvoll, wenn die Umgebungsbedingungen am Stellglied die für die Reglereinheit spezifizierten Werte überschreiten. Das kann beispielsweise der Fall sein bei einer hohen Temperatur am Ventil oder Antrieb aufgrund eines heißen Fließmediums, bei starken Schwingungen oder Vibrationen am Ventil oder Antrieb oder wenn am Ventil oder Antrieb wenig Platz für den Anbau des vollständigen Stellungsreglers vorhanden ist.

Weitere Vorteile des neuen Stellungsreglers sind seine Einsetzbarkeit in explosionsgefährdeten Bereichen durch seinen niedrigen Leistungsbedarf und einfach integrierbare Schutzschaltungen, weite Versorgungsspannungstoleranzen, eine Minimierung von externen Störeinflüssen durch integrierte Schirme und EMI-Filter, eine Minimierung der Temperatureinflüsse bei kleinem Speisestrom, eine Minimierung und stabile Reproduzierbarkeit der Hysterese als Funktion des Drehwinkels zwischen Magnet und GMR-Sensor sowie der Feldstärke.

Die kleinen Schwankungen der Hysterese und der geringen Unlinearität, die sich aus der Exemplarstreuung der GMR-Sensoren ergeben, sind bei der Anwendung als Positionsgeber in einem Stellungsregler irrelevant. Wenn die Ist-Position als Information durch den Stellungsregler an weitere Komponenten einer Anlage ausgegeben werden soll, kann das Ausgangssignal entsprechend der bekannten Linearitäts- und Hysteresekennlinie des einzelnen GMR-Sensors einfach korrigiert und aktiv gefiltert werden. Dazu können bei Bedarf in einem Mikrocontroller des Stellungsreglers die exemplarspezifischen Korrekturdaten des GMR-Sensors gespeichert werden. Für eine vereinfachte Korrektur der Linearitäts- und Hysteresefehler genügt die exemplarspezifische Ermittlung und Speicherung von fünf charakteristischen Stützwerten, die unter Standardbedingungen aufgenommen werden. Die Stützwerte können beispielsweise an den Stellen der maximalen Steigungsänderung der Kennlinien liegen. Für eine exaktere Korrektur können auch die gesamten Kennlinien mit der gewünschten Auflösung in einem seriell auslesbaren, mit den GMR-Sensor ausgelieferten und diesem durch eine Identifikationskennung zugeordneten Speichermedium abgelegt werden. Der Inhalt des Speichermediums kann beispielsweise bei der Installation des GMR-Sensors in den Mikrocontroller geladen werden.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:

| | |
|---|---|
| Figur 1 | ein Regelventil, |
| Figur 2 | ein Blockschaltbild eines Positionsgebers, |
| Figur 3 | eine Schaltung zur Temperaturkompensation, |
| Figur 4 | eine Schaltung zur Verstärker- und Offseteinstellung, |
| Figur 5 | eine Flachbaugruppe mit den Schaltungen nach den Figuren 3 und 4, |
| Figur 6 | einen Metallschirm für die Flachbaugruppe nach Figur 5, |
| Figur 7 | eine Draufsicht auf einen geöffneten Metallschirm, |
| Figur 8 | eine Seitenansicht eines geöffneten Metallschirms, |
| Figur 9 | ein Gehäuse für einen GMR-Sensor, |
| Figur 10 | einen Verschlussdeckel für das Gehäuse nach Figur 9, |
| Figur 11 | eine Ansicht eines Winkelpositionsgebers von unten, |
| Figur 12 | eine Seitenansicht des Winkelpositionsgebers nach Figur 11, |
| Figur 13 | eine Ansicht eines Linearpositionsgebers von unten, |
| Figur 14 | eine Seitenansicht des Linearpositionsgebers nach Figur 13, |
| Figur 15 | ein Positionsgeber für Drehwinkel an einem Schwenkantrieb, |
| Figur 16 | einen Längsschnitt durch den Positionsgeber nach Figur 15, |
| Figur 17 | einen Querschnitt durch den Positionsgeber nach Figur 15, |
| Figur 18 | eine Explosionszeichnung einer Einrichtung zur Befestigung des Magneten in Schnittdarstellung und |
| Figur 19 | eine Explosionszeichnung einer Einrichtung zur Befestigung des Magneten in perspektivischer Darstellung. |

In eine Rohrleitung 1 einer nicht weiter dargestellten prozesstechnischen Anlage ist gemäß Figur 1 ein Ventil 2 eingebaut, das durch einen entsprechenden Hub eines mit einem Ventilsitz 3 zusammenwirkenden Schließkörpers 4 den Durchfluss eines Mediums 5 steuert. Der Hub wird durch einen pneumatischen Antrieb 6 erzeugt und mittels einer Ventilstange 7 auf den Schließkörper 4 übertragen. Der Antrieb 6 ist über ein Joch 8 mit dem Gehäuse des Ventils 2 verbunden.

An dem Joch 8 ist ein Positionsgeber 9 angebracht, der eingangsseitig über ein an der Ventilstange 7 geführtes Verbindungsstück 10 den Hub erfasst und ein dem Hub entsprechendes analoges Ausgangssignal 11 erzeugt. Im pneumatischen Antrieb 6 befindet sich eine im Wesentlichen horizontal verlaufende Membran, welche eine obere von einer unteren Kammer trennt. Über eine Rohrleitung 12 ist die untere Kammer mit einer Reglereinheit 13 verbunden, die in einem vom Gehäuse des Positionsgebers 9 getrennten Gehäuse untergebracht ist. In der oberen Kammer ist eine Feder angeordnet, welche gegen den Druck der unteren Kammer wirkt und im drucklosen Fall das Ventil 2 verschließt. Durch Ventile in der Reglereinheit 13 gesteuert kann über eine Leitung 14 zugeführte Zuluft mit einem Druck P über die Leitung 12 in die untere Kammer eingeleitet oder Abluft über eine Leitung 15 in die Umgebung gelassen werden. Die Reglereinheit 13 vergleicht die mit dem Signal 11 erhaltene Ist-Position der Ventilstange 7, die regelungstechnisch als Stellglied bezeichnet werden kann, mit einem über eine Datenschnittstelle 16 von einem Feldbus 17 zugeführten Sollwert und regelt durch entsprechende Einstellung der Luftströmung in der Rohrleitung 12 eine evtl. vorhandene Regeldifferenz aus. Das Verbindungsstück 10 ist durch einen Zapfen realisiert, der an der Ventilstange 7 befestigt ist und somit den Hubbewegungen der Ventilstange 7 folgt. Eine an diesem Zapfen angebrachte Einrichtung 19 trägt einen Magneten 18, der somit entlang des Gehäuses des Positionsgebers 9, das auch einen GMR-Sensor enthält, in einer dem Hub der Ventilstange 7 entsprechenden Bewegung geführt wird. Während der Positionsgeber 9 am Joch 8 befestigt und somit einer evtl. hohen Umgebungstemperatur ausgesetzt ist, kann die Reglereinheit 13 entfernt hiervon in weniger rauher Umgebung beispielsweise an einem in der Figur 1 nicht dargestellten Montagerohr befestigt werden. Dadurch wird der Einsatzbereich des Stellungsreglers, der üblicherweise empfindliche Ventile zur pneumatischen Steuerung enthält, erweitert.

Ein Prinzipschaltbild einer in den Positionsgeber 9 (Figur 1) integrierten Auswerteschaltung mit GMR-Sensor ist in Figur 2 dargestellt. Prinzipiell besteht die Auswerteschaltung für die von der Richtung des Magnetfelds abhängige Widerstandsänderung des GMR-Sensors aus einer Schaltung 20 zur Versorgung der Messbrücke und zur Temperaturkompensation, welche unter anderem die Messbrücke selbst enthält, sowie aus einer Schaltung 21 zur Signalkonditionierung mit Offsetbildung und Verstärkung eines Brückenausgangssignals dU, das von der Schaltung 20 geliefert wird. Die Schaltung 21 erzeugt ein Ausgangssignal 22, beispielsweise mit einem Wertebereich von 0,1 bis 2,5 V, welches die Ist-Position des Stellglieds darstellt. Das Ausgangssignal 22 entspricht dem Signal 11 in Figur 1. In Figur 2 nicht dargestellt sind weitere Schaltungsteile, z.B. EMI-Filter und redundante elektronische Stromund Spannungsbegrenzungen, die in den Anschlusszweigen der Schaltung liegen und der Störsicherheit dienen sowie bezüglich des Explosionsschutzes unzulässige Betriebszustände vermeiden. Die gesamte Auswerteschaltung zeichnet sich durch einen besonders geringen Strombedarf von weniger als 300 μA aus.

Figur 3 ist eine Detaildarstellung der Schaltung 20 (Figur 2), die zur Temperaturkompensation und zur Versorgung eines GMR-Sensors 30 dient. Der GMR-Effekt ist temperaturabhängig. Die Brückenausgangsspannung dU kann durch die folgende Formel angenähert werden:

$$dU(\alpha,T)=\frac{1}{2}\cdot\frac{\Delta R}{R_o}(T_0)\cdot\left[1+Tk_{\Delta R/Ro_lin}\cdot(T-T_0)+Tk_{\Delta R/Ro_Q}\cdot(T-T_o)^2\right]\cdot U_b(T)\cdot\cos(\alpha)+U_{off}$$

$$dU(T)\sim U_b\cdot\left[f(T)\right]$$

mit

| | |
|---|---|
| $\alpha$ - | der zwischen der Richtung des magnetischen Feldes und dem GMR-Sensor eingeschlossene Winkel, |
| T - | Temperatur des GMR-Sensors 30, |
| $T_0$ - | 20 °C, |
| $R_0$ - | Widerstand bei 20 °C, |
| $Tk_{\Delta R/Ro_lin}$ und $Tk_{\Delta R/Ro_Q}$ - | Kompensationsparameter und |
| $U_{off}$ - | eine Offsetspannung. |

Um einem Abfallen der Brückenausgangsspannung dU des GMR-Sensors 30 mit der Temperatur entgegenzuwirken, wird eine Versorgungsspannung Ub der Brücke entsprechend erhöht. Diese Funktion wird mit der in Figur 3 dargestellten Schaltung realisiert. Ohne einen Widerstand $R_{komp}$ würde die Schaltung eine Konstantstromquelle für einen Strom Ib darstellen, dessen Wert durch einen Widerstand R1 und die Spannung an einem Spannungsteiler eingestellt wird, der mit Widerständen R4 und R5 sowie R3 gebildet ist. Versorgt wird der Spannungsteiler mit einer Spannung $V_{ref}$ = 2,5 V. Da der Widerstand der GMR-Sensorbrücke $R_{sen}$ mit der Temperatur steigt, die mit der Richtung des Magnetfeldes sich ändernde Spannung dU am Brückenausgang aber um etwa das zweifache fällt, reicht die Spannungserhöhung durch die Konstantstromquelle nicht aus, um die Amplitude der Brückenausgangsspannung dU unabhängig von der Temperatur konstant zu halten. Deshalb wird die Spannungserhöhung durch eine positive Rückkopplung mit dem Widerstand $R_{komp}$ derart eingestellt, dass durch diese der Rückgang des Sensoreffektes an der Sensorbrücke ausgeglichen wird. Der Brückenwiderstand des GMR-Sensors 30 selbst dient dabei als Temperatursensor. Für eine optimale Temperaturkompensation wird $R_{komp}$ festgelegt zu:

$$R_{komp}=\frac{R_{sen}(T_o)\cdot(R_3R_4+R_3R_5+R_4R_5)}{R_1(R_4+R_5)}\cdot\frac{1}{\left(\frac{1}{C}-\frac{1}{D}\right)}\cdot\left(\frac{1}{\left[1-50Tk_{\Delta R/Ro_lin}+2500Tk_{\Delta R/Ro_Q}\right]}-\frac{1}{\left[1+60Tk_{\Delta R/Ro_lin}+3600Tk_{\Delta R/Ro_Q}\right]}\right)$$

mit

$$C = \left[1 - 50Tk_{\Delta R/Ro_lin} + 2500Tk_{\Delta R/Ro_Q}\right]\left[1 - 50Tk_{Rsen_lin} + 2500Tk_{Rsen_Q}\right]$$

und

$$D = \left[1 + 60Tk_{\Delta R/Ro_lin} + 3600Tk_{\Delta R/Ro_Q}\right]\left[1 + 60Tk_{Rsen_lin} + 3600Tk_{Rsen_Q}\right]$$

Diese Schaltung zeichnet sich bei geeigneter Wahl der Werte der Widerstände R1, R3, R4 und R5 durch einen besonders niedrigen Stromverbrauch bei guter Genauigkeit der Temperaturkompensation aus.

Das Ausgangssignal dU des GMR-Sensors 30 (Figur 3) wird mit der in Figur 4 gezeigten Schaltung bezüglich seiner Verstärkung und seiner Offseteinstellung angepasst. Ein Operationsverstärker 40, der mit einer Versorgungsspannung Ucc = 3 V betrieben wird, dient gemeinsam mit einem Spannungsteiler mit Widerständen $R_{off}$ und R9, an welchem eine Referenzspannung Uref = 2,5 V angelegt ist, zur Offseteinstellung. Die am Ausgang des Operationsverstärkers 40 erhaltene Ausgangsspannung ist auf einen Differenzverstärker 41 geführt, der zur Einstellung der Verstärkung dient. Dieser Differenzverstärker 41 wird ebenfalls mit einer Versorgungsspannung Ucc = 3 V betrieben. Auf diese Weise wird das differentiell vorliegende Signal dU von etwa 3 mV auf 1,2 V verstärkt und auf ein mittleres Potential von 1,3 V angehoben. Ein Ausgangssignal 42, das dem Signal 11 in Figur 1 entspricht, hat einen Wertebereich von 0,1 bis 2,5 V. Ein Verstärkerwiderstand $R_{gain}$ wird derart dimensioniert, dass der Wertebereich des Ausgangssignals dU des GMR-Sensors 30 (Figur 3) auf den Wertebereich des Ausgangssignals 42 abgebildet wird. Auch diese Schaltung zeichnet sich durch einen besonders geringen Stromverbrauch aus. Dies ist besonders wichtig bei Verwendung des Positionsgebers in Kombination mit einem Feldbus, über welchen die zum Betrieb der Schaltungsteile erforderliche Betriebsenergie gemeinsam mit den Informationssignalen übertragen wird. Auch bei Verwendung einer 4 bis 20 mA-Schnittstelle für den Stellungsregler ist ein geringer Stromverbrauch der Schaltungsteile von besonderer Bedeutung, da der Stellungsregler lediglich mit einem Betriebsstrom von etwa 4 mA auskommen muss.

Figur 5 zeigt eine Möglichkeit zur räumlichen Anordnung eines GMR-Sensors 50 und einer Auswerteschaltung auf einer Leiterplatte 52. Der GMR-Sensor 50 ist auf der abgewandten Unterseite der hier zur besseren Verdeutlichung transparent dargestellten Leiterplatte 52 angebracht, während die Bauelemente 51 der Auswerteschaltung auf der Oberseite bestückt sind. Dadurch wird erreicht, dass die höheren Bauelemente 51 der Auswerteschaltung nicht bei der Festlegung des Abstandes zwischen der Oberkante des GMR-Sensors 50 und der Gehäuseaußenseite berücksichtigt werden müssen. An der Vorderkante der Leiterplatte 52 sind vier Lötfahnen 53 bestückt, in welchen Kabelenden 54 eines Kabels 55 eingelötet werden. Zwei Adern des Kabels dienen zur Ausgabe des Ausgangssignals (11 in Figur 1), die zwei weiteren Adern zur Versorgung der elektronischen Schaltungsteile des Positionsgebers.

Alternativ zu den beschriebenen Ausführungsbeispiel mit einem GMR-Sensor 50 kann der Sensor auch als sogenannter anisotrop magnetoresistiver Sensor ausgebildet sein. Das Schaltungsprinzip der Auswerteschaltung bleibt davon unberührt.

Die so bestückte Flachbaugruppe 56 wird in einen Metallschirm 60 eingesetzt, der in Figur 6 in gefalteten und in den Figuren 7 und 8 in geöffnetem Zustand dargestellt ist.

In den Figuren sind jeweils gleiche Teile mit gleichen Bezugszeichen versehen. Zur lagerichtigen Aufnahme der Flachbaugruppe 56 sind drei Lötstifte 61, 62 und 63 vorgesehen, welche in dazu korrespondierende Bohrungen der Leiterplatte 52 hineinragen und dort zur Montage eingelötet werden. Nach Einlöten der Leiterplatte 52 wird der Metallschirm zusammengefaltet und das Kabel 55 in Klemmlaschen 64, 65 und 66 eingelegt und dort durch Klemmkraft gehalten. In dem Bereich, in welchem der GMR-Sensor 50 zu liegen kommt, ist im Metallschirm 60 eine im Wesentlichen halbkreisförmigem Ausnehmung 67 angebracht, damit ein magnetisches Feld den Metallschirm 60 durchdringen und den GMR-Sensor 50 erreichen kann. Eine Ausnehmung 68 dient zur exakten Positionierung des Metallschirms 60 in einem Gehäuse 90, das in Figur 9 dargestellt ist. Die Ausnehmung 68 wird beim Einfügen in das Gehäuse 90 auf eine Rippe aufgeschoben, welche in Figur 9 durch die Gehäuseoberseite verdeckt wird. Bei erfolgter Zentrierung kommt diese Rippe in einer Nut 69 der Ausnehmung 68 zu liegen. Das Gehäuse 90 des GMR-Sensors 50 besteht beispielsweise aus Kunststoff oder einem nicht ferromagnetischen Material, welches die Flachbaugruppe 56 vor Umwelteinflüssen schützt. Gleichzeitig bietet das Gehäuse 90 Befestigungsmöglichkeiten für den Positionsgeber am Einsatzort. Zur einfachen Befestigung an genormten Anbausätzen sind zwei Aufnahmeöffnungen 91 und 92 für Schrauben sowie ein Positionierstift 93 am Gehäuse 90 angebracht. Der Positionierstift 93 ist in Figur 9 verdeckt und lediglich in den Figuren 11 und 13, welche die Ansicht des Gehäuses von unten wiedergeben, sichtbar. Mit diesen Befestigungsmöglichkeiten ist in jedem Fall eine stabile Zuordnung des Positionsgebers zum Stellglied realisierbar.

Nach Einschieben des mit der Flachbaugruppe 56 bestückten und gefalteten Metallschirms 60 in das Gehäuse 90 wird dieses durch einen in Figur 10 dargestellten Deckel 100 verschlossen, der zu den Gehäuseinnenseiten korrespondierende Führungslaschen 101 bis 104 aufweist.

Der Metallschirm 60 ist zwischen der Flachbaugruppe 56 und dem Gehäuse 90 aus Gründen der elektromagnetischen Verträglichkeit angeordnet, d.h. um die Beeinflussung der Auswerteschaltung durch elektromagnetische Störungen zu vermeiden und um die Abstrahlung von elektromagnetischen Wellen zu verhindern. Alternativ zu den gezeigten Ausführungsbeispiel kann eine elektromagnetische Abschirmung durch eine Metallisierung eines Gehäuses aus Kunststoff oder durch einen Einsatz von metallfasergefülltem Kunststoff erreicht werden. Der dabei verwendete Werkstoff darf jedoch, um die Funktion des GMR-Sensors nicht zu beeinträchtigen, im Bereich des GMR-Sensors keine ferromagnetischen Eigenschaften besitzen.

Die Flachbaugruppe 56 kann zum verbesserten Schutz und zum Einsatz in explosionsgefährdeten Bereichen im Gehäuse 90 mit einem isolierenden Füllstoff vergossen werden.

Das vieradrige Kabel 55 zur Verbindung des Positionsgebers mit der Reglereinheit kann je nach Einsatzfall einfach oder doppelt geschirmt ausgeführt werden. Eine elektrische Verbindung der Kabelschirme mit der Flachbaugruppe 56 und/oder dem Metallschirm 60 ist in einfacher Weise möglich.

In den Figuren 11 bis 14 wird die räumliche Anordnung eines Magneten zum Gehäuse 90 deutlich. Zur Erfassung von Drehwinkeln befindet sich ein Magnet 94 etwa mittig unter einer im Wesentlichen halbkreisförmigen Ausnehmung 95 im Gehäuse 90. Die Ausnehmung 95 stellt eine Zentrierhilfe für die Einstellung der relativen Lage des Magneten 94 zum GMR-Sensor 50 dar, der sich im Gehäuse 90 befindet. Dazu kann in die Ausnehmung 95 ein formschlüssiges Positionierwerkzeug eingelegt werden, welches den Magneten 94 aufnimmt. Nach fester Montage des Magneten an einem in den Figuren 11 und 12 nicht weiter dargestellten Bewegungsteil ist der Magnet 94 zentriert und das Positionierwerkzeug kann entfernt werden. Die Drehachse des Magneten 94 verläuft in Figur 11 senkrecht zur Zeichnungsebene. Die Drehbarkeit des Magneten 94 ist durch einen Pfeil 96 angedeutet. In Figur 12 verläuft die Drehachse durch die Mitte des Magneten 94 in horizontaler Richtung. Die Figuren 13 und 14 zeigen die Anordnung eines Magneten 97 zur Erfassung von Linearbewegungen. Dies ist durch einen Verschiebepfeil 98 angedeutet. Der Magnet 97 befindet sich hier gemeinsam mit dem GMR-Sensor 50, der innerhalb des Gehäuses 90 angeordnet ist, im Wesentlichen in einer senkrecht zu der oben beschriebenen Drehachse verlaufenden Ebene, die parallel zur Zeichnungsebene der Figur 13 liegt. Wiederum kann durch ein Positionierwerkzeug, das formschlüssig zur Ausnehmung 95 sowie zum Magneten 97 ausgebildet ist, die exakte Positionierung des Magneten erleichtert werden. Durch die gewählte Anordnung des GMR-Sensors 50 in seinem Gehäuse 90 wird erreicht, dass derselbe GMR-Sensor sowohl zur Erfassung von Drehwinkeln als auch von Linearbewegungen ohne konstruktive Änderungen seines Gehäuses geeignet ist. Die Magneten 94 und 97 sind in einem in den Figuren 11 bis 14 nicht dargestellten Kunststoffteil gefasst und zum Schutz vor Umwelteinflüssen vergossen. Die Führung der Magneten 94 und 97 in einem in den Zeichnungen 11 bis 14 nicht dargestellten Bewegungsteil werden konstruktiv an die jeweiligen Einbaubedingungen angepasst, so dass die Dreh- oder Linearbewegung eines Stellglieds in eine dazu korrespondierende Dreh- oder Linearbewegung der Magneten 94 bzw. 97 umgesetzt wird.

Für die Detektion der Position eines Schwenkantriebs 151 ist die Befestigung eines Magneten 150 auf der Stirnseite einer drehbaren Welle mit einer Einrichtung erforderlich, die in Figur 15 zur Verdeutlichung ihres Aufbaus in aufgeschnittener Form dargestellt ist. Üblicherweise ragt aus dem Gehäuse des Schwenkantriebs 151 ein Zapfen 152 heraus, dessen Nut/Feder-Schnittstelle nach NAMUR festgelegt ist. Mittels eines Haltebügels 153, der an das Gehäuse des Schwenkantriebs 151 angeschraubt ist, wird ein GMR-Sensor mit seinem Gehäuse 155 derart angebracht, dass der GMR-Sensor etwa auf der Drehachse des Zapfens 152 zu liegen kommt. Eine Möglichkeit zur Justage der Lage des GMR-Sensors ist durch Langlöcher als Befestigungsbohrungen im Haltebügel 153 gegeben. Der Haltebügel 153 selbst besteht vorzugsweise aus einem nichtmagnetischen Material, beispielsweise Aluminium. Der Aufbau der Einrichtung zur Befestigung des Magneten 150 an dem Zapfen 152 als beweglichem Element wird im Folgenden gleichzeitig anhand der Figuren 15 bis 19 beschrieben, in welchen diese in verschiedenen Ansichten dargestellt ist. Gleiche Teile sind wiederum mit gleichen Bezugszeichen versehen.

Der Magnet 150 wird durch einen Magnetträger 160 aufgenommen, der mit einer zur Form des Magneten 150 korrespondierenden Ausnehmung versehen ist. Im Magnetträger 160 wird der Magnet 150 durch eine Klebung oder durch Verguss mit einer geeigneten Vergussmasse befestigt. Somit ist er vor Umwelteinflüssen sicher geschützt. Der Magnetträger 160 übt die Funktion eines Gehäuses für den Magneten 150 aus. Er ist zur variablen Einstellung einer Winkellage des Magneten 150 zum beweglichen Element 152 in einem Sockel 161, der an dem beweglichen Element 152 befestigt ist, drehbar gelagert. Dazu weist der Magnetträger 160 an seiner Unterseite eine rotationssymetrische, im wesentlichen in einer radialen Ebene verlaufende, kreisförmige Fläche 162 auf, welche zu einer Fläche 163 an der Oberseite des Sockels 161 korrespondiert. Durch einen ringförmigen Kragen 164, welche in eine zylinderförmige Ausnehmung 165 des Sockels 161 hineinragt, wird eine koaxiale Lage der beiden Teile zueinander sichergestellt. Ist bei bestimmten Anwendungsfällen eine relative Verdrehbarkeit der beiden Teile Magnetträger 160 und Sockel 161 unerwünscht, so kann in einfacher Weise beispielsweise auf der Fläche 162 eine stift- oder domförmige Erhebung und in der Fläche 163 eine dazu korrespondierende Ausnehmung, welche im montierten Zustand ineinandergreifen, vorgesehen werden. Auch mit einer derartigen Ausbildung kann eine drehbare Lagerung leicht herbeigeführt werden,

indem die stift- oder domförmige Erhebung mit einem geeigneten Werkzeug, beispielsweise einem Messer, entfernt wird.

Magnetträger 160 und Sockel 161 sind jeweils mit einem radial nach außen ragenden Rand 170 bzw. 171 versehen. Eine Oberseite 172 des Randes 170 und eine Unterseite 173 des Randes 171 sind kronisch, d.h. kegelabschnittförmig, ausgebildet. Wenn der Magnetträger 160 auf den Sockel 161 aufgesetzt ist, weisen die Seiten 172 und 173 des Randes 170 bzw. des Randes 171 nach außen. Sie werden deshalb auch als Außenseiten der Ränder bezeichnet. Vor dem Zusammensetzen der beiden Teile wird der Sockel 161 mit einer Schraube 180 auf dem Zapfen 152 befestigt, der an seiner Oberseite eine Nut 181 sowie eine Gewindebohrung 182 aufweist, welche zu einer Feder 183 bzw. zum Gewinde 184 der Schraube 180 korrespondieren. Die Art der Befestigung des Sockels 161 an einem beweglichen Element kann leicht an die Gegebenheiten des jeweiligen Einsatzortes angepasst werden, wenn der Befestigungsort nicht in der dargestellten Weise ausgebildet ist. Nach Zusammensetzen des Magnetträgers 160 und des Sockels 161 wird eine im Wesentlichen hohlzylinderförmige Klammer 175 in axialer Richtung aufgesetzt. Die Klammer 175 weist eine vordere Halbschale 176 sowie eine hintere Halbschale 177 auf, die über Stege 178 bzw. 179 an einem an der Oberseite befindlichen Ring 190 federnd aufgehängt sind. Beim Aufsetzen der Klammer 175 kommt die Unterseite des Rings 190 auf der Oberseite 172 des Randes 170 zu liegen und bildet eine Lagerfläche. An den Innenseiten der Halbschalen 176 und 177 sind jeweils zwei mit Schrägen nach innen ansteigenden Verdickungen angebracht, von denen in Figur 18 lediglich eine Verdickung 191 sichtbar ist. Diese Verdickungen hintergreifen den Rand 171 des Sockels 161 und Lagerflächen, beispielsweise eine Lagerfläche 192 der Verdickung 191 liegen auf der Unterseite 173 des Randes 171 auf. Aufgrund der federnden Aufhängung der Halbschalen 176 und 177 rastet die Klammer 175 auf den Rändern 170 und 171 ein und drückt die Flächen 162 und 163 leicht zusammen, so dass der Magnetträger 160 bei Kraftaufwendung gegenüber dem Sockel 161 verdreht werden kann. In diesem Zustand kann somit in einfacher Weise eine Nullpunkteinstellung bei einer Bezugslage des beweglichen Teils durch Drehen des Magnetträgers 160 vorgenommen werden. Falls erforderlich ist hierzu am Magnetträger 160 ein geeignetes Werkzeug, beispielsweise ein Gabelschlüssel, ansetzbar.

Zur Verriegelung der Klammer 175 und somit des Drehlagers wird eine Spannkappe 200 in axialer Richtung auf die Klammer 175 aufgesetzt. Hierzu weist die Spannkappe 200 an zwei gegenüberliegenden Seiten jeweils eine kronisch sich nach oben verengende Nut auf, von denen in Figur 18 lediglich eine Nut 201 sichtbar ist. Durch die Wandungen dieser Nuten werden beim Aufsetzen an den Enden der Halbschalen 176 und 177 befindliche, radial nach außen weisende Laschen, von denen in Figur 19 die Laschen 203 und 204 gut sichtbar sind, zusammengedrückt, so dass die Halbschalen 176 und 177 gegeneinander gezogen werden. Auf diese Weise werden die an den Innenseiten der Klammer 175 befindlichen Verdickungen, beispielsweise die Verdickung 191, mit großer Kraft in radialer Richtung nach innen gedrückt und die zugehörigen Lagerflächen, beispielsweise die Lagerfläche 192, gleiten an der Außenseite 173 des Randes 171 entlang, so dass der Ring 190 auf die Außenseite 172 des Randes 170 gezogen wird. Dies führt zu einer hohen Anpresskraft der beiden Flächen 162 und 163, so dass der Magnetträger 160 nicht mehr ohne weiteres gegenüber dem Sockel 161 verdreht werden kann. Die Spannkappe 200 ist zu ihrer Befestigung mit zwei Rastfedern 210 und 211 versehen, die bei aufgesetzter Spannkappe 200 jeweils mit einer dazu korrespondierenden, treppenförmigen Verzahnung an der Klammer 175 verrasten. In den Figuren 18 und 19 ist lediglich eine Verzahnung 213 sichtbar. Durch die treppenförmige Ausbildung dieser Verrastung wird ein gewisser Toleranzausgleich ermöglicht, da sie mehrere Raststellungen erlaubt. Die Verrastung kann durch Biegen der Rastfedern 210 und 211 nach außen geöffnet werden. Durch einen nach innen überstehenden Rand 215 der Spannkappe 200 wird der Ring 190 der Klammer 175 zusätzlich auf die Oberseite 172 des Randes 170 gedrückt.

Vorteilhaft werden der Sockel 161, der Magnetträger 160, die Klammer 175 und die Spannkappe 200 aus Kunststoff hergestellt und gleichzeitig in einem Werkzeug gefertigt. Dadurch wird eine Minimierung abweichender Fertigungsstreuungen, die durch unterschiedliche Spritzbedingungen begründet sind, erreicht.

Alternativ zu dem gezeigten Ausführungsbeispiel können Magnetträger und Klammer mit Vorteil durch ein einziges Bauteil realisiert werden.

## Patentansprüche

1. Einrichtung zur Befestigung eines Magneten (150) an einem beweglichen Element (152), **dadurch gekennzeichnet, dass** ein Magnetträger (160) vorgesehen ist zur Aufnahme des Magneten (150), dass der Magnetträger (160) zur variablen Einstellung einer Winkellage zum beweglichen Element (152) in einem an dem beweglichen Element befestigten Sockel (161) drehbar gelagert ist, dass Mittel (175, 200) vorhanden sind zur Sicherung einer eingestellten Winkellage und dass Magnetträger (160), Sockel (161) und die Mittel (175, 200) zur Lagesicherung aus einem nichtmagnetischen Material bestehen.

2. Einrichtung nach Anspruch 1, **dadurch gekennzeichnet, dass** der Magnetträger (160) als Gehäuse ausgebildet

ist, in welchem der Magnet (150) durch Kleben oder durch Verguss befestigt ist.

3. Einrichtung nach Anspruch 1 oder 2, **dadurch gekennzeichnet, dass** der Magnetträger (160) und der Sockel (161) zur drehbaren Lagerung des Magnetträgers mit zueinander korrespondierenden, im Wesentlichen in einer radialen Ebene verlaufenden, kreisförmigen Flächen (162, 163) versehen sind, und dass die Mittel (175, 200) zur Lagesicherung eine Klammer (175) aufweisen, welche die Flächen zusammendrückt.

4. Einrichtung nach Anspruch 3, **dadurch gekennzeichnet, dass** Magnetträger (160) und Sockel (161) jeweils mit einem radial nach außen ragenden Rand (170, 171) versehen sind, dass zumindest eine Außenseite (172, 173) eines Randes (170, 171) kronisch ausgebildet ist, so dass Magneträger (160) und Sockel (161) beim Ansetzen der im Wesentlichen hohlzylinderförmigen Klammer (175), welche die Außenseiten (172, 173) der Ränder mit an ihrer Innenseite angeordneten Lagerflächen (192) hintergreift, zusammengedrückt werden.

5. Einrichtung nach Anspruch 4, **dadurch gekennzeichnet, dass** eine Spannkappe (200) vorgesehen ist, welche die Außenseiten der Klammer (175) überragt und diese im montierten Zustand verriegelt.

6. Stellungsregler mit einer Einrichtung nach einem der Ansprüche 1 bis 5, insbesondere für ein durch einen Antrieb (6) betätigbares Ventil (2),
mit einem Positionsgeber (9) zur Erfassung der Ist-Position eines Stellglieds (7) und
mit einer Reglereinheit (13) zum Vergleich der Ist-Position mit einer vorgebbaren Soll-Position und zur Erzeugung eines Stellsignals,
**dadurch gekennzeichnet,**
**dass** als Positionsgeber (9) der Magnet (18, 150) und ein magnetoresistiver Sensor (50) vorgesehen sind, welche korrespondierend zu einer Bewegung des Stellglieds (7) relativ zueinander dreh- oder verschiebbar sind.

7. Stellungsregler nach Anspruch 6, **dadurch gekennzeichnet, dass** der Magnet (18) als Permanentmagnet ausgebildet ist.

8. Stellungsregler nach Anspruch 6 oder 7, **dadurch gekennzeichnet, dass** der Sensor als sogenannter anisotrop magnetoresistiver Sensor ausgebildet ist.

9. Stellungsregler nach Anspruch 6 oder 7, **dadurch gekennzeichnet, dass** der Sensor als sogenannter giant magnetoresistiver (GMR-)Sensor ausgebildet ist.

10. Stellungsregler nach Anspruch 9, **dadurch gekennzeichnet, dass** der GMR-Sensor (50) im Randbereich eines Gehäuses (90) angeordnet ist derart, dass derselbe Sensor (50) zur Detektion einer relativen Drehbewegung zumindest näherungsweise auf der Drehachse eines für diesen Fall vorgesehenen Magneten (94) positionierbar ist und dass der Sensor zur Detektion einer relativen Verschiebung gemeinsam mit einem für diesen Fall vorgesehenen Magneten (97) in einer im Wesentlichen senkrecht zur oben erwähnten Drehachse verlaufenden Ebene positionierbar ist.

11. Stellungsregler nach Anspruch 10, **dadurch gekennzeichnet, dass** im Gehäuse des GMR-Sensors (50) eine Temperaturkompensationsschaltung angeordnet ist.

12. Stellungsregler nach Anspruch 11, **dadurch gekennzeichnet, dass** der Brückenwiderstand des GMR-Sensors (30) der Messwiderstand der Temperaturkompensationsschaltung ist.

13. Stellungsregler nach Anspruch 11 oder 12, **dadurch gekennzeichnet, dass** der GMR-Sensor (50) auf der Unterseite und die Temperaturkompensationsschaltung auf der Oberseite derselben Leiterplatte (52) angeordnet sind.

14. Stellungsregler nach einem der Ansprüche 10 bis 13, **dadurch gekennzeichnet, dass** am Gehäuse (90) des GMR-Sensors (50) eine Zentrierhilfe (95) für die Einstellung der relativen Lage des Magneten (94, 97) zum Sensor (50) bei der Montage vorgesehen ist.

15. Stellungsregler nach einem der Ansprüche 10 bis 14, **dadurch gekennzeichnet, dass** die Reglereinheit (13) in einem zweiten, vom Gehäuse (90) des GMR-Sensors (50) getrennten Gehäuse angeordnet ist.

FIG 1

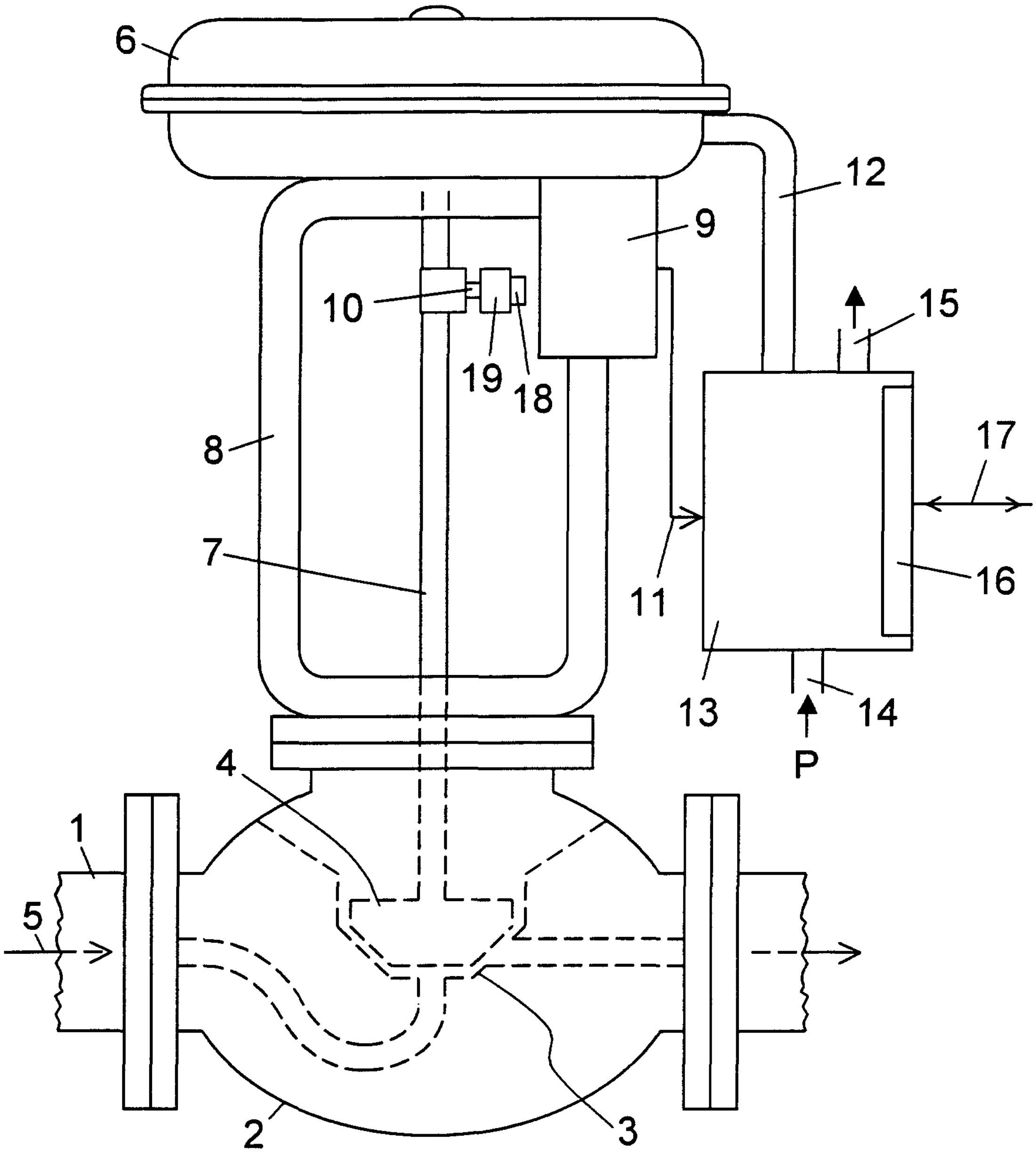

FIG 2

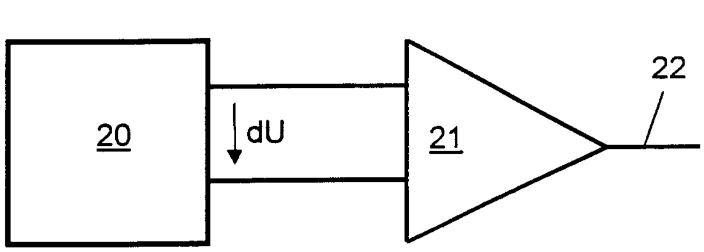


FIG 3

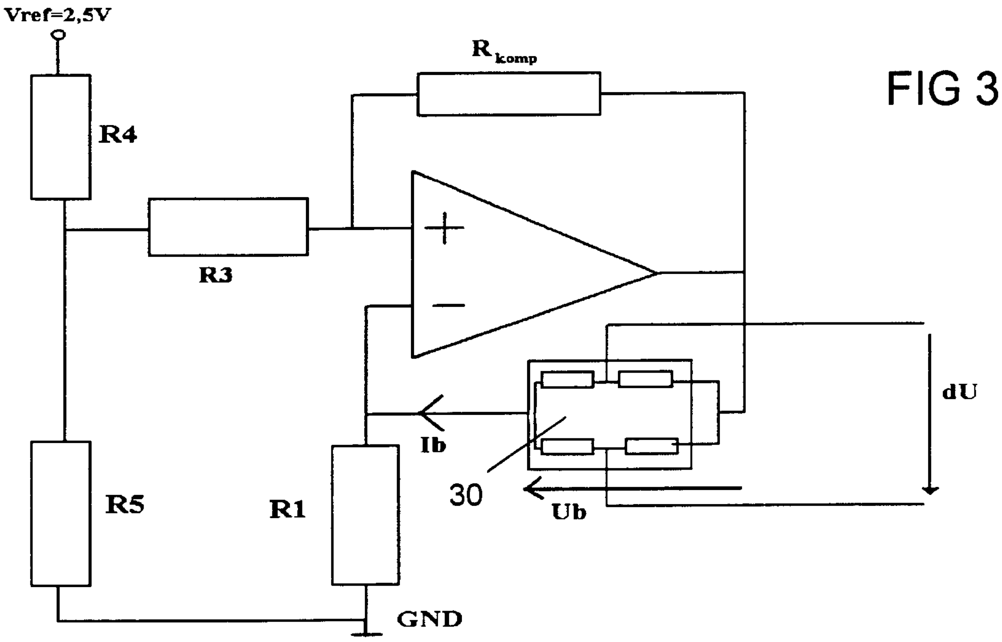


FIG 4

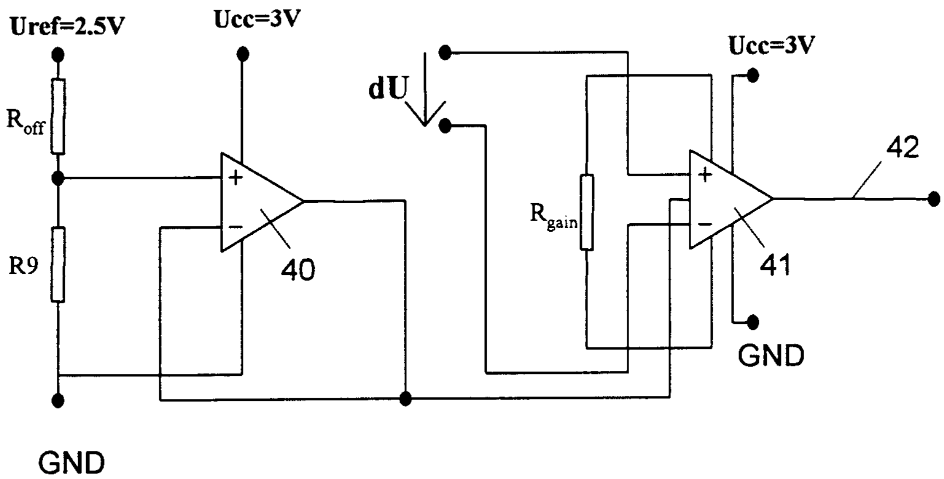

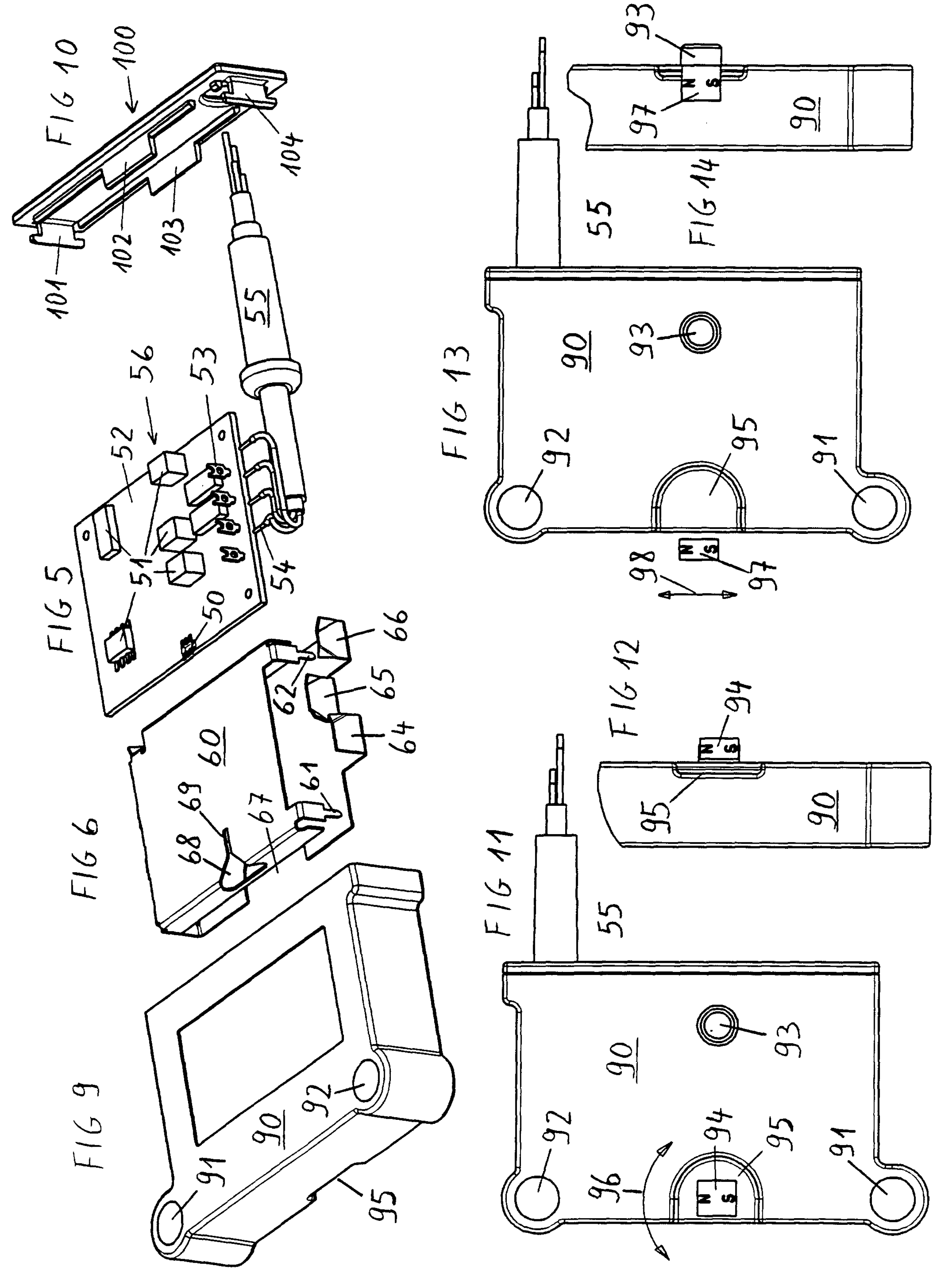
FIG 5
FIG 6
FIG 9
FIG 10
FIG 11
FIG 12
FIG 13
FIG 14
50
51
52
53
54
55
56
60
61
62
64
65
66
67
68
69
90
91
92
93
94
95
96
97
98
100
101
102
103
104
N
S

FIG 7

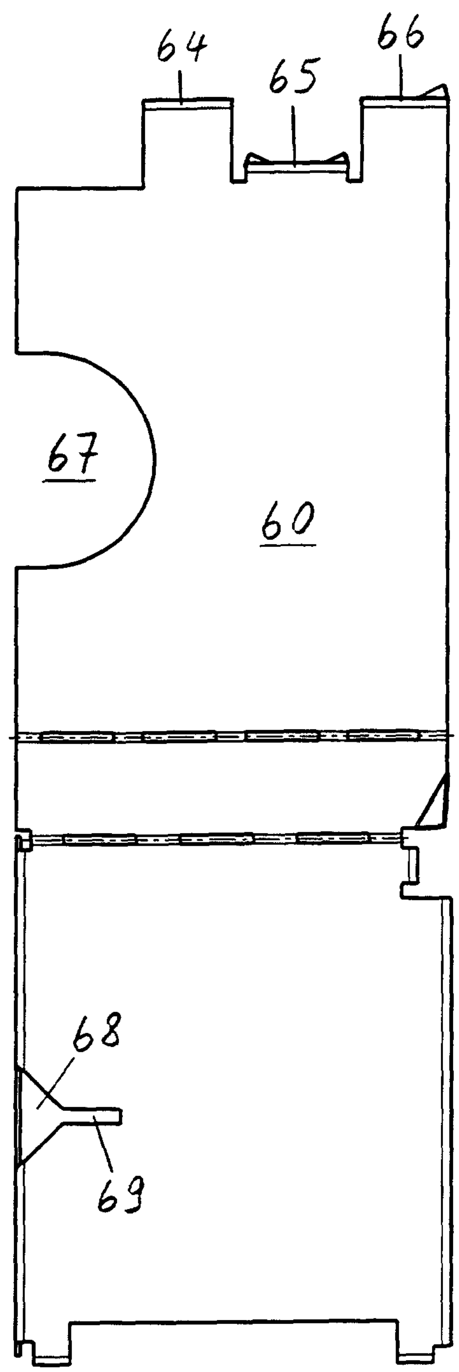


FIG 8

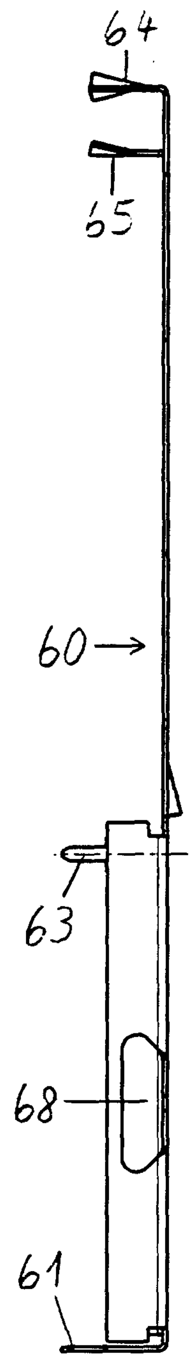

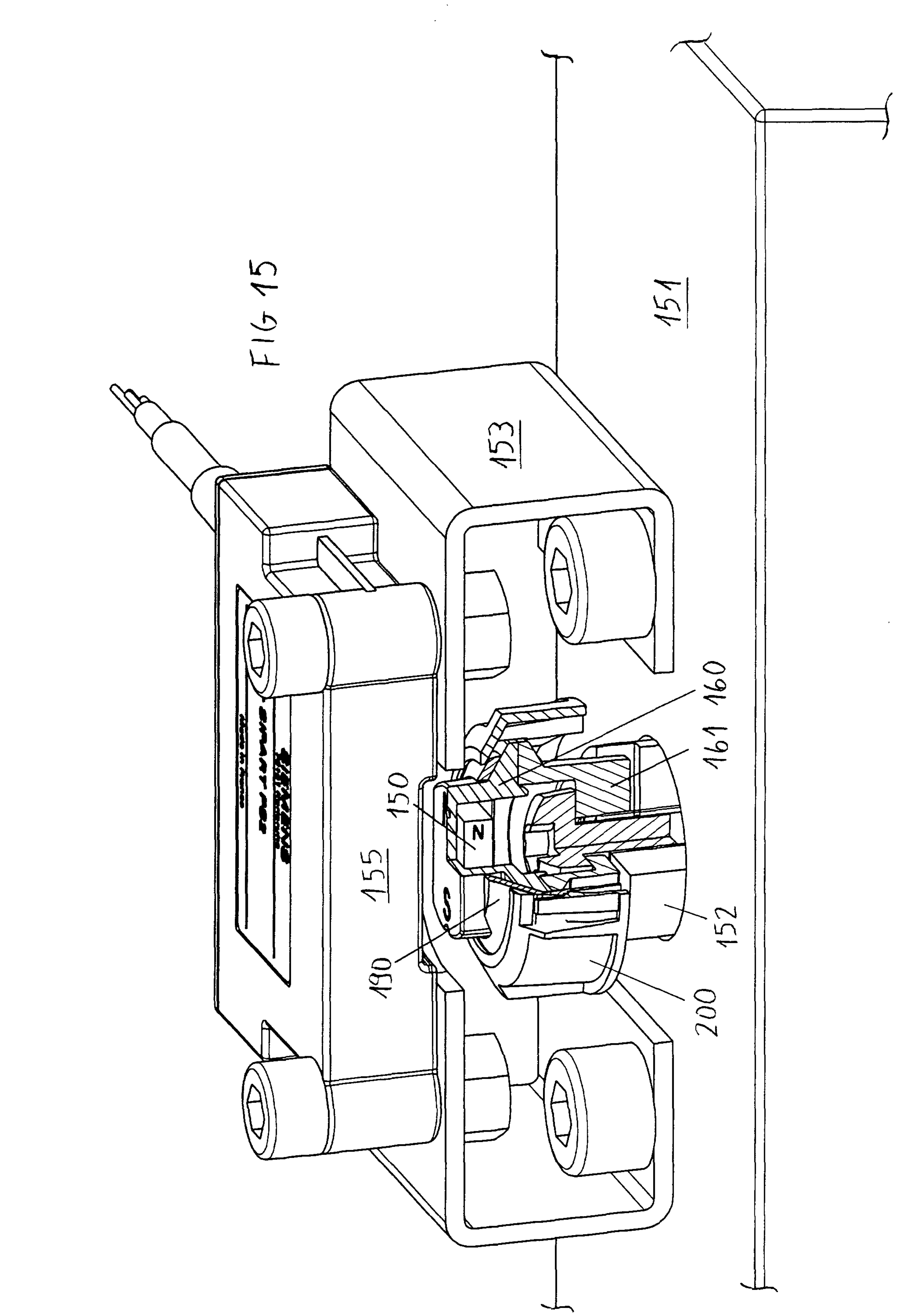


FIG 15

FIG 17

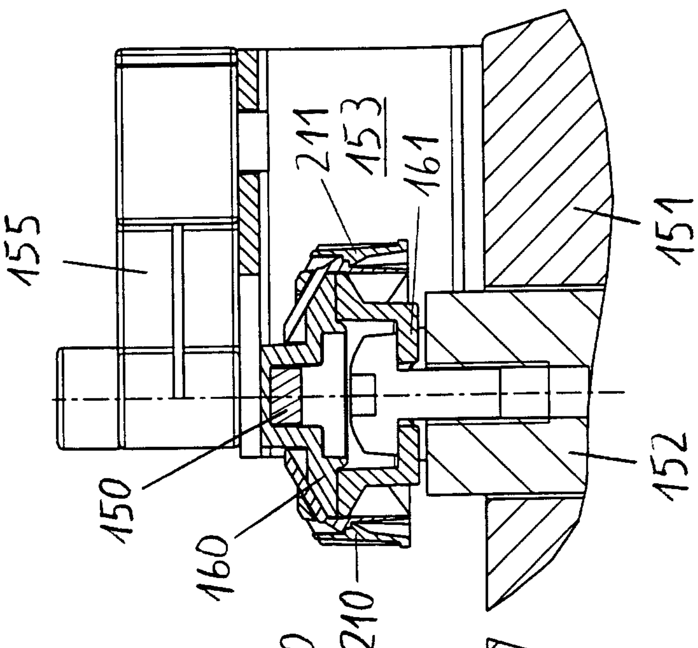
155
211
153
161
151
152
150
160
210

FIG 16

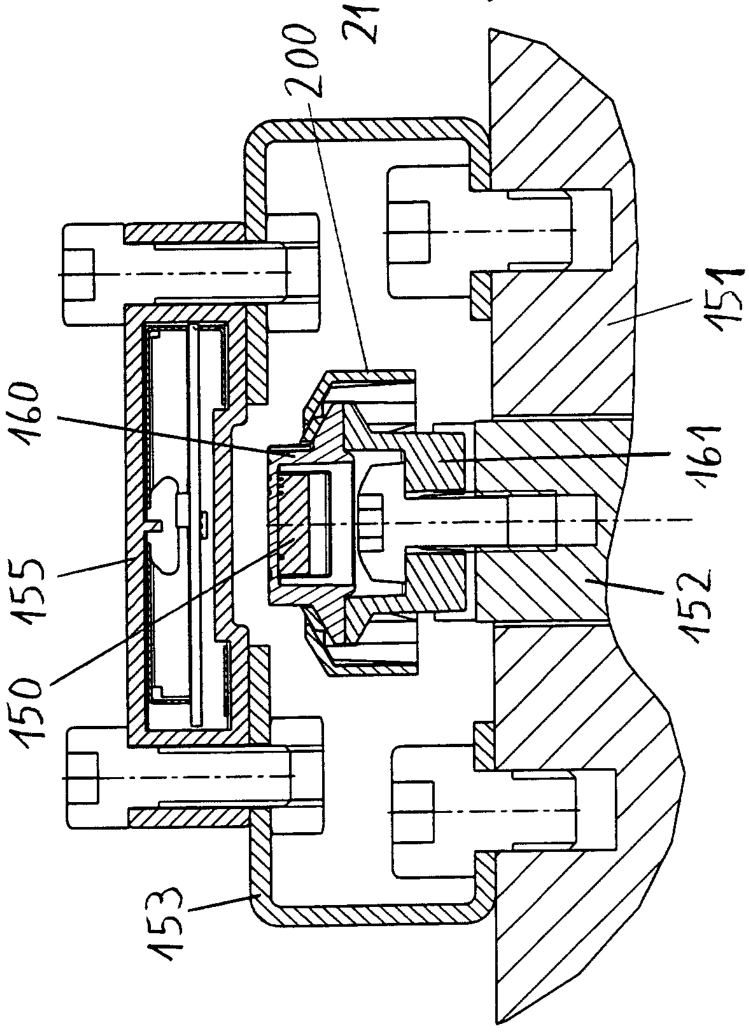
200
160
151
161
155
152
150
153

FIG 18

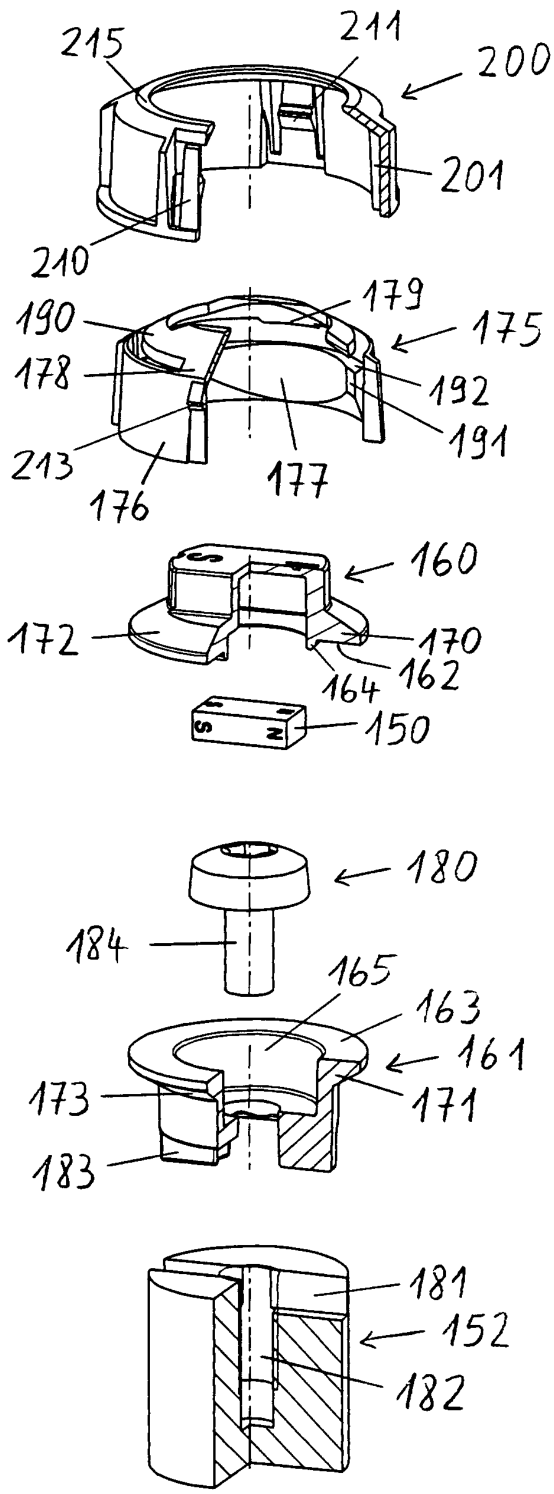
215
211
200
201
210
179
190
175
178
192
213
191
177
176
160
172
170
162
164
150
180
184
165
163
161
173
171
183
181
152
182

FIG 19

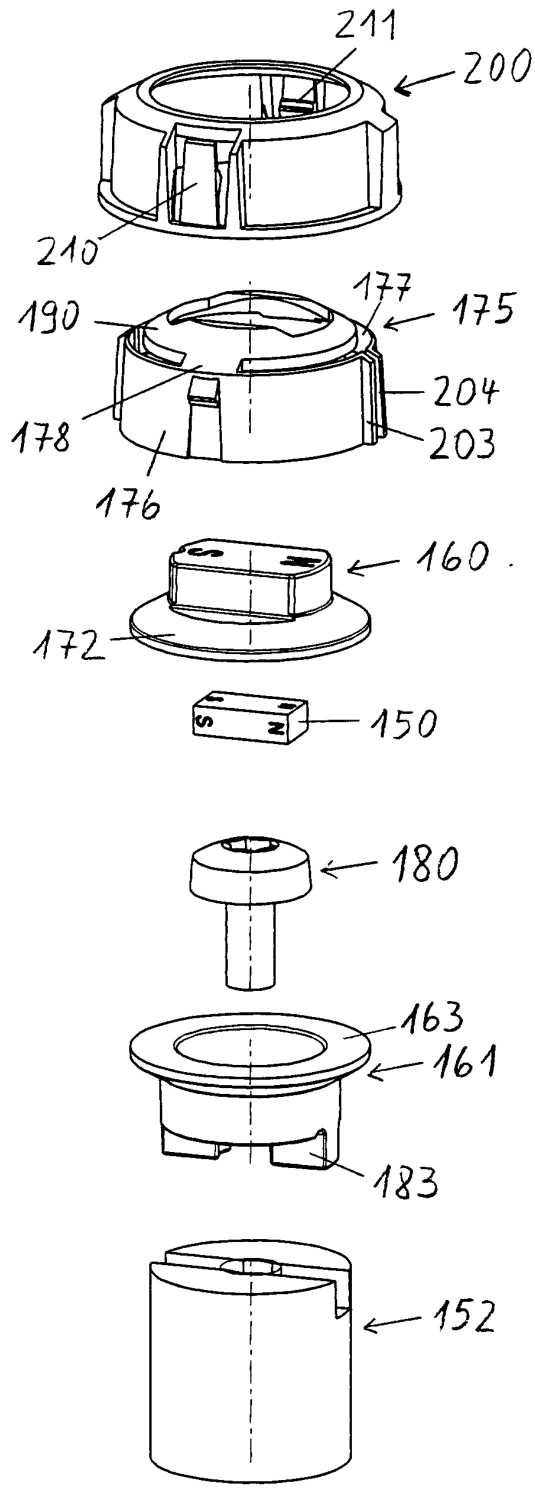
211
200
210
177
190
175
204
178
203
176
160
172
150
180
163
161
183
152

Europäisches Patentamt

# EUROPÄISCHER RECHERCHENBERICHT

Nummer der Anmeldung
EP 01 11 2268

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 223 822 A (STOMMES WALLACE F ET AL) 29. Juni 1993 (1993-06-29)<br>* Spalte 7, Zeile 40-50 *<br>* Spalte 11, Zeile 48 - Spalte 12, Zeile 39 *<br>* Zusammenfassung *<br>* Abbildungen 2,3,11,12 *<br>--- | 1,3 | F16K37/00<br>G01D5/16 |
| A | US 5 195 382 A (PEILLOUD FERNAND) 23. März 1993 (1993-03-23)<br>* Spalte 1, Zeile 66 - Spalte 2, Zeile 46 *<br>* Abbildung 1 *<br>--- | 1,2 | |
| A | EP 0 637 713 A (HONEYWELL AG) 8. Februar 1995 (1995-02-08)<br>* Spalte 3, Zeile 15 - Spalte 5, Zeile 53 *<br>* Zusammenfassung *<br>* Abbildungen 1-4 *<br>--- | 1,6 | |
| A | DE 198 52 916 A (BOSCH GMBH ROBERT) 18. Mai 2000 (2000-05-18)<br>* Spalte 1, Zeile 48 - Spalte 3, Zeile 17 *<br>* Abbildungen 1-8 *<br>--- | 1 | RECHERCHIERTE SACHGEBIETE (Int.Cl.7)<br>F16K<br>G01D |
| A | EP 0 959 328 A (CTS CORP) 24. November 1999 (1999-11-24)<br>* Spalte 4, Zeile 27 - Spalte 6, Zeile 21 *<br>* Abbildungen 1-7 *<br>----- | 1 | |

Der vorliegende Recherchenbericht wurde für alle Patentansprüche erstellt

| Recherchenort | Abschlußdatum der Recherche | Prüfer |
|---|---|---|
| MÜNCHEN | 27. Juli 2001 | Heneghan, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 01 11 2268

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-07-2001

| Im Recherchenbericht angeführtes Patentdokument | Datum der Veröffentlichung | Mitglied(er) der Patentfamilie | Datum der Veröffentlichung |
|---|---|---|---|
| US 5223822 A | 29-06-1993 | CA 2133965 A | 11-11-1993 |
| | | DE 69327458 D | 03-02-2000 |
| | | EP 0637396 A | 08-02-1995 |
| | | WO 9322753 A | 11-11-1993 |
| US 5195382 A | 23-03-1993 | FR 2661246 A | 25-10-1991 |
| | | CS 9101103 A | 12-11-1991 |
| | | DE 69103665 D | 06-10-1994 |
| | | DE 69103665 T | 23-03-1995 |
| | | EP 0453344 A | 23-10-1991 |
| | | ES 2059074 T | 01-11-1994 |
| | | RU 2061947 C | 10-06-1996 |
| | | TR 25946 A | 01-11-1993 |
| EP 0637713 A | 08-02-1995 | DE 4326343 A | 09-02-1995 |
| | | CA 2129470 A | 06-02-1995 |
| DE 19852916 A | 18-05-2000 | AU 1261300 A | 05-06-2000 |
| | | WO 0029814 A | 25-05-2000 |
| EP 0959328 A | 24-11-1999 | US 6188216 B | 13-02-2001 |
| | | JP 2000028312 A | 28-01-2000 |

EPO FORM P0461

Für nähere Einzelheiten zu diesem Anhang : siehe Amtsblatt des Europäischen Patentamts, Nr.12/82